(19) Europäisches Patentamt
European Patent Office
Office européen des brevets

(11) **EP 4 645 225 A1**

(12) **EUROPEAN PATENT APPLICATION**
published in accordance with Art. 153(4) EPC

(43) Date of publication:
**05.11.2025 Bulletin 2025/45**

(21) Application number: **23910278.3**

(22) Date of filing: **19.12.2023**

(51) International Patent Classification (IPC):
***G06T 7/73*** (2017.01)

(52) Cooperative Patent Classification (CPC):
**G06T 7/73**

(86) International application number:
**PCT/CN2023/140007**

(87) International publication number:
**WO 2024/140348 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022  CN 202211741448**
**03.01.2023  CN 202310009410**

(71) Applicant: **Beijing Roborock Innovation Technology Co., Ltd.**
**Beijing 102206 (CN)**

(72) Inventors:
• **CAI, Weiyan**
**Beijing 102206 (CN)**
• **GUO, Mingli**
**Beijing 102206 (CN)**

(74) Representative: **Cabinet Beau de Loménie**
**103, rue de Grenelle / CS 90800**
**75340 Paris Cedex 07 (FR)**

(54) **OBSTACLE RECOGNITION METHOD, APPARATUS, ELECTRONIC DEVICE, AND STORAGE MEDIUM**

(57)    The present disclosure provides an obstacle recognition method, an apparatus, an electronic device, and a storage medium. The method comprises: collecting a laser image of a target area; extracting candidate laser bars in the laser image; obtaining the theoretical position of a reference laser line in the laser image; selecting valid laser bars from among the candidate laser bars on the basis of the theoretical position; and obtaining the position of an obstacle on the basis of the position of the valid laser bars in a world coordinate system.

```
┌─────────────────────────────────────┐
│ Acquiring a laser image of a target area │─ S101
└─────────────────────────────────────┘
                  ↓
┌─────────────────────────────────────┐
│ Extracting candidate laser stripes from the laser image │─ S102
└─────────────────────────────────────┘
                  ↓
┌─────────────────────────────────────┐
│ Obtaining a theoretical position of a reference laser line in the laser image │─ S103
└─────────────────────────────────────┘
                  ↓
┌─────────────────────────────────────┐
│ Screening a valid laser stripe from the candidate laser stripes based on the theoretical position │─ S104
└─────────────────────────────────────┘
                  ↓
┌─────────────────────────────────────┐
│ Obtaining a position of an obstacle based on a position of the valid laser stripe in a world coordinate system │─ S105
└─────────────────────────────────────┘
```

**FIG. 1**

EP 4 645 225 A1

**EP 4 645 225 A1**

**Description**

**CROSS-REFERENCE TO RELATED APPLICATIONS**

The present application claims priority to Chinese Patent Application No. 202211741448.X, filed to the Chinese Patent Office on December 30, 2022 and titled "Obstacle Identification Method and Apparatus, Electronic Device and Storage Medium", and Chinese Patent Application No. 202310009410.1, filed to the Chinese Patent Office on January 3, 2023 and titled "Method and Apparatus for Detecting Distance Between Robot and Wall, Medium and Electronic Device", the entire contents of which are incorporated herein by reference in their entireties.

**TECHNICAL FIELD**

The present disclosure relates to the technical field of obstacle identification, and in particular, to an obstacle identification method and apparatus, an electronic device and a storage medium.

**BACKGROUND ART**

When performing a cleaning task, a mobile robot needs to accurately identify the relative positional relationship between an obstacle and the robot itself, and mark the obstacle on a 2D grid map to achieve the effect of obstacle avoidance. There may be a large quantity of obstacles with special materials and various shapes in the environment where the mobile robot works. Obstacles with attributes such as reflective materials, light-absorbing materials and low shapes usually impose a relatively high requirement on the environment perception capability of the mobile robot.

**SUMMARY OF THE INVENTION**

The present disclosure provides an obstacle identification method and apparatus, a mobile robot electronic device and a storage medium to improve the accuracy of obstacle identification.
According to a first aspect of the present disclosure, an obstacle identification method is provided. The method includes:

> acquiring a laser image of a target area;
> extracting candidate laser stripes from the laser image;
> obtaining a theoretical position of a reference laser line in the laser image;
> screening a valid laser stripe from the candidate laser stripes based on the theoretical position; and
> obtaining the position of an obstacle based on the position of the valid laser stripe in a world coordinate system.

In some embodiments, obtaining the theoretical position of the reference laser line in the laser image includes:

> obtaining a light plane equation of a laser in a camera coordinate system;
> obtaining a reference plane equation in the camera coordinate system; and
> obtaining an intersecting line expression of the light plane equation and the reference plane equation to obtain the theoretical position.

In some embodiments, obtaining the reference plane equation in the camera coordinate system specifically includes:

> based on a transformation matrix $T_{wc}$ from the camera coordinate system to the world coordinate system, converting coordinates of a plurality of points on a reference plane in the world coordinate system into coordinates in the camera coordinate system; and
> establishing the reference plane equation in the camera coordinate system based on the converted coordinates of the plurality of points.

In some embodiments, for a mobile robot, obtaining the transformation matrix $T_{wc}$ from the camera coordinate system to the world coordinate system includes:

> obtaining a transformation matrix $T_{RC}$ between a mobile robot coordinate system and the camera coordinate system;
> obtaining a current posture $T_{WI}$ of the mobile robot in the world coordinate system through an inertial measurement unit;

2

obtaining a transformation matrix $T_{RI}$ between an inertial measurement unit coordinate system with the mobile robot coordinate system; and
calculating the transformation matrix $T_{wc}$ from the camera coordinate system to the world coordinate system:

$$T_{WC} = T_{WI} \bullet T_{RI}^{-1} \bullet T_{RC} .$$

In some embodiments, obtaining the intersecting line expression of the light plane equation and the reference plane equation to obtain the theoretical position specifically includes:

selecting two points $P_a = (x_a, y_a, z_a)$ and $P_a = (x_b, y_b, z_b)$ of the reference laser line in the camera coordinate system, setting $z_a = 1$, $z_b = 2$, and substituting them into the light plane equation and the reference plane equation to obtain $x_a$, $y_a$, $x_b$ and $y_b$;

obtaining coordinates $(u_a, v_a)$ of $P_a$ in a pixel coordinate system based on $x_a$ and $y_a$;

obtaining coordinates $(u_b, v_b)$ of $P_b$ in the pixel coordinate system based on $x_b$ and $y_b$;

establishing the intersecting line expression:

$$A_{fl}x + B_{fl}y + C_{fl}z = 0 ;$$

and

obtaining parameters of the intersecting line expression based on $(u_a, v_a)$ and $(u_b, v_b)$.

In some embodiments, acquiring the laser image of the target area includes:

emitting a horizontal line laser to the target area, wherein an angle between the horizontal line laser and a reference plane is greater than 0° and less than 90°; and
obtaining the laser image of the target area.

In some embodiments, the obstacle identification method further includes:

obtaining a background image of the target area; and
after the laser image of the target area is obtained, the obstacle identification method further includes:
performing background subtraction on the laser image based on the background image.

In some embodiments, for a mobile robot, before performing the background subtraction on the laser image based on the background image, the obstacle identification method further includes:

obtaining motion information of the mobile robot; and
performing motion compensation on the background image based on the motion information.

In some embodiments, extracting the candidate laser stripes from the laser image specifically includes:
extracting pixel areas with pixel gray values greater than a preset gray value from the laser image as the candidate laser stripes.
In some embodiments, screening the valid laser stripe from the candidate laser stripes based on the theoretical position specifically includes:

obtaining a distance between each candidate laser stripe and the theoretical position; and
taking the candidate laser stripe with the smallest distance as the valid laser stripe.

In some embodiments, obtaining the position of the obstacle based on the position of the valid laser stripe in the world coordinate system specifically includes:
obtaining the position of a central pixel point of the valid laser stripe in the world coordinate system to obtain the position of the obstacle.
In some embodiments, the obstacle is a wall, and the method further includes:

obtaining three-dimensional point cloud data of the wall in a first coordinate system, wherein the first coordinate system is a coordinate system established by the robot at a current position with the robot as an origin;
fusing the three-dimensional point cloud data into a robot-centered grid map to determine wall grid points in the grid map;
fitting the wall grid points corresponding to the wall in the grid map to obtain a wall contour line; and
calculating a distance between the robot and the wall based on the wall contour line.

In some embodiments, obtaining the three-dimensional point cloud data of the wall in the first coordinate system includes:

obtaining light stripe information acquired by the robot at the current position and projected onto the wall via a line laser; and
determining the three-dimensional point cloud data of the wall in the first coordinate system based on the light stripe information.

In some embodiments, obtaining the light stripe information acquired by the robot at the current position and projected onto the wall via the line laser includes:

obtaining a wall image acquired by the robot at the current position with the line laser activated, as a first image;
obtaining a wall image acquired by the robot at the current position with the line laser deactivated, as a second image; and
performing differential processing on the first image and the second image to obtain the light stripe information projected onto the wall via the line laser.

In some embodiments, determining the three-dimensional point cloud data of the wall in the first coordinate system based on the light stripe information includes:

determining wall point cloud coordinates of a light stripe pixel center in the light stripe information in the camera coordinate system according to a mapping relationship from the camera coordinate system to the pixel coordinate system; and
determining the three-dimensional point cloud data of the wall in the first coordinate system according to the wall point cloud coordinates and a transformation matrix from the camera coordinate system to the first coordinate system.

In some embodiments, obtaining the three-dimensional point cloud data of the wall in the first coordinate system further includes:

obtaining position change information of the robot moving from a previous position to the current position;
obtaining three-dimensional point cloud data of the wall in a second coordinate system, wherein the second coordinate system is a coordinate system established by the robot at the previous position with the robot as an origin; and
converting the three-dimensional point cloud data of the wall in the second coordinate system into the three-dimensional point cloud data in the first coordinate system based on the position change information.

In some embodiments, fitting the wall grid points corresponding to the wall in the grid map to obtain the wall contour line includes:

determining noise grid points among the wall grid points of the grid map, and determining the wall grid points other than the noise grid points as target grid points; and
fitting the target grid points in the grid map to obtain the wall contour line.

In some embodiments, determining the noise grid points among the wall grid points of the grid map includes:

traversing each wall grid point in the grid map to determine a probability value of the wall grid point, wherein the probability value is used to characterize the credibility of the wall grid point being used to reflect the wall;
if the probability value is less than or equal to a probability threshold, determining the wall grid point as a first noise grid point and determining the wall grid points other than the first noise grid points as candidate grid points;
traversing each candidate grid point in the grid map to determine the number of the candidate grid points in a preset grid area where the candidate grid points are located;

determining the candidate grid points as second noise grid points if the number of the candidate grid points is less than or equal to a number threshold; and

determining the first noise grid point and the second noise grid points as the noise grid points.

According to a second aspect of the present disclosure, there is provided an obstacle identification apparatus which includes:

an acquisition module for acquiring a laser image of a target area;

an extraction module for extracting candidate laser stripes from the laser image;

an obtaining module for obtaining a theoretical position of a reference laser line in the laser image;

a screening module for screening a valid laser stripe from the candidate laser stripes based on the theoretical position; and

a conversion module for obtaining a position of an obstacle based on the position of the valid laser stripe in a world coordinate system.

According to a third aspect of the present disclosure, there is provided a mobile robot which includes:

a robot body;

a horizontal laser module disposed on the robot body, wherein the horizontal laser module includes an infrared laser emitter and a camera, and the horizontal laser module is used to acquire a laser image of a target area and send the laser image to a control module;

an inertial measurement unit disposed in the robot body and used to obtain a posture of the mobile robot in a world coordinate system and send the posture to the control module; and

the control module used to execute the obstacle identification method according to any of the above embodiments.

According to a fourth aspect of the present disclosure, there is provided an electronic device which includes:

a processor, and

a memory for storing a program,

wherein the program includes instructions which, when executed by the processor, cause the processor to execute the method according to any of the above embodiments.

According to a fifth aspect of the present disclosure, there is provided a non-transitory computer-readable storage medium storing instructions of a computer, wherein the instructions of the computer are used to cause the computer to execute the method according to any one of the above embodiments.

The obstacle identification method provided by the embodiments of the present disclosure can improve the accuracy of valid laser stripe identification by screening the candidate laser stripes based on the theoretical position of the reference laser line in the laser image, thereby enhancing the accuracy of obstacle identification.

## BRIEF DESCRIPTION OF THE DRAWINGS

FIG. 1 is a flow chart of an obstacle identification method according to an embodiment of the present disclosure;

FIG. 2 is a schematic diagram of a mobile robot according to an embodiment of the present disclosure;

FIG. 3 is a schematic diagram of motion compensation according to an embodiment of the present disclosure;

FIG. 4 is a laser image when there is no obstacle;

FIG. 5 is a laser image when there is an obstacle;

FIG. 6 shows a schematic diagram of a scenario allowing application of line laser ranging according to an embodiment of the present disclosure;

FIG. 7 shows a flow chart of a method for detecting a distance between a robot and a wall according to an embodiment of the present disclosure;

FIG. 8 shows a detailed flow chart of obtaining three-dimensional point cloud data of a wall in a first coordinate system according to an embodiment of the present disclosure;

FIG. 9 shows another detailed flow chart of obtaining three-dimensional point cloud data of a wall in a first coordinate system according to an embodiment of the present disclosure;

FIG. 10 shows a demonstration diagram of determining wall grid points in a grid map according to an embodiment of the present disclosure;

FIG. 11 shows a detailed flow chart of fitting wall grid points corresponding to a wall in a grid map according to an embodiment of the present disclosure;

FIG. 12 shows a demonstration diagram of fitting wall grid points corresponding to a wall in a grid map according to an embodiment of the present disclosure;

FIG. 13 shows a flow chart of controlling a robot to move along a wall according to an embodiment of the present disclosure;

FIG. 14 is a schematic flow chart of a method for detecting an obstacle according to another embodiment of the present disclosure;

FIG. 15 is a schematic diagram of an obstacle identification apparatus according to an embodiment of the present disclosure; and

FIG. 16 shows a block diagram of an apparatus for detecting a distance between a robot and a wall according to an embodiment of the present disclosure.

## DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as being limited to the embodiments described herein. Instead, these embodiments are provided for a more thorough and complete understanding of the present disclosure. It should be understood that the drawings and embodiments of the present disclosure are only for exemplary purposes and are not intended to limit the scope of protection of the present disclosure.

It should be understood that steps described in the embodiments of the method of the present disclosure may be executed in different sequences and/or in parallel. Furthermore, the embodiments of the method may include additional steps and/or omit performing shown steps. The scope of the present disclosure is not limited in this aspect.

The term "include" as used herein and its variations are open-ended, meaning "including but not limited to". The term "based on" means " based at least in part on". The term "one embodiment" means "at least one embodiment"; the term "another embodiment" means "at least one additional embodiment"; and the term "some embodiments" means "at least some embodiments". Relevant definitions of other terms are given in the following description. It should be noted that concepts such as "first" and "second" mentioned in the present disclosure are only used to distinguish different apparatuses, modules or units, and are not used to limit the sequence or interdependence of functions performed by these apparatuses, modules or units.

It should be noted that the modifications of "one" and "a plurality of" mentioned in the present disclosure are indicative rather than restrictive, and those skilled in the art should understand that they should be understood as "one or more" unless expressly indicated otherwise in the context.

The names of messages or information exchanged between the plurality of apparatuses in the embodiments of the present disclosure are used for illustrative purposes only and are not used to limit the scope of the messages or information.

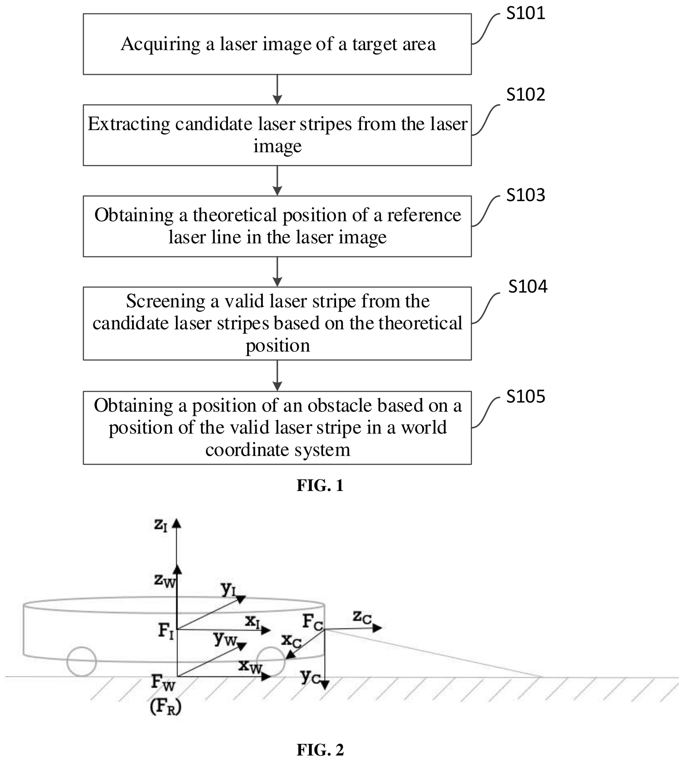

FIG. 1 is a flow chart of an obstacle identification method according to an embodiment of the present disclosure. As shown in FIG. 1, the embodiment of the present disclosure provides an obstacle identification method which includes the following steps:

S101: acquiring a laser image of a target area;
S102: extracting candidate laser stripes from the laser image;
S103: obtaining a theoretical position of a reference laser line in the laser image;
S104: screening a valid laser stripe from the candidate laser stripes based on the theoretical position; and
S105: obtaining a position of an obstacle based on a position of the valid laser stripe in a world coordinate system.

The obstacle identification method provided by the embodiment of the present disclosure effectively addresses impact of reflection, refraction, etc. in a scenario on the laser image by screening the candidate laser stripes based on the theoretical position of the reference laser line in the laser image, and thus can improve the accuracy of valid laser stripe identification to enhance the accuracy of obstacle identification.

Obstacles in the present disclosure include but are not limited to any object on the ground in an environment where a mobile robot operates, such as tables, chairs, sofas, and may also include walls, wall-mounted wardrobes, and the like.

Specifically, the ground may be taken as a reference plane, and a ground line may be taken as a reference laser line.

In some embodiments, the obstacle identification method is applied to a mobile robot that may be a cleaning robot. The mobile robot includes:

a robot body;

a horizontal laser module disposed on the robot body, wherein the horizontal laser module includes an infrared laser emitter and a camera, and the horizontal laser module is used to acquire a laser image of a target area and send the laser image to a control module; in the embodiment, the target area is a target moving area of the robot body; the infrared laser emitter is used to emit a horizontal line laser in a moving direction of the robot body; an angle between a light plane of the horizontal line laser and the reference plane is greater than 0° and less than 90° and may be 45°, 50° or 60°; when the horizontal line laser ligh path hits the obstacle, positions of the laser stripes in the laser image may be changed; by imaging in the camera using this phenomenon, the valid laser stripe for characterizing the obstacle may be effectively found in the laser image; position information of a surface of the obstacle in the world coordinate system may be solved based on the position of the valid laser stripe in a camera coordinate system;

an inertial measurement unit disposed in the robot body and used to obtain a posture of the mobile robot in the world coordinate system and send the posture to the control module; and the control module used to execute the obstacle identification method according any embodiment.

The embodiment can effectively avoid influence of ambient light sources by active emitting of the horizontal line laser through the infrared laser emitter. An intersecting line of a light plane of the horizontal line laser and the reference plane is close to the mobile robot, which can reduce secondary reflection and refraction of light to avoid adverse effects on subsequent extraction of the valid laser stripe. Meanwhile, the horizontal line laser creates a smaller blind zone of obstacle avoidance than a vertical line laser, and may effectively identify low obstacles at a close distance.

FIG. 2 is a schematic diagram of a mobile robot according to an embodiment of the present disclosure. As shown in FIG. 2, in practical use, at first, the world coordinate system is defined as $F_W$, a mobile robot coordinate system is defined as $F_R$, an inertial measurement unit coordinate system is defined as $F_I$, and a camera coordinate system is defined as $F_C$.

Internal and external parameters of the camera are loaded, wherein the internal and external parameters include

a mapping $K = \begin{bmatrix} f_x & 0 & u_0 \\ 0 & f_y & v_0 \\ 0 & 0 & 1 \end{bmatrix}$ from the camera coordinate system to a pixel coordinate system, and a transforma-

tion matrix $T_{WC} = \begin{bmatrix} R_{WC} & t_{wc} \\ 0 & 1 \end{bmatrix}$ from the camera coordinate system to the robot coordinate system. Before the robot moves, the robot coordinate system coincides with the world coordinate system.

A light plane equation of a laser in the camera coordinate system is

$$A_{laser}x + B_{laser}y + C_{laser}z + D_{laser} = 0.$$

A reference plane equation in the camera coordinate system is

$$A_{ref}x + B_{ref}y + C_{ref}z + D_{ref} = 0.$$

Three points on a reference plane are selected in the world coordinate system: $P_1^W = (x_{1w}, y_{1w}, z_{1w}), P_2^W = (x_{2w}, y_{2w}, z_{2w}), P_3^W = (x_{3w}, y_{3w}, z_{3w})$ , which are transformed in the camera coordinate system into $P_1^C = T_{WC}^{-1}P_1^W = (x_1, y_1, z_1), P_2^C = T_{WC}^{-1}P_2^W = (x_2, y_2, z_2), P_3^C = T_{WC}^{-1}P_3^W = (x_3, y_3, z_3)$ .

Therefore, parameters of the reference plane equation in the camera coordinate system can be obtained:

$$A_{ref} = (y_2 - y_1) \bullet (z_3 - z_1) - (y_3 - y_1) \bullet (z_2 - z_1)$$

$$B_{ref} = (z_2 - z_1) \bullet (x_3 - x_1) - (z_3 - z_1) \bullet (x_2 - x_1)$$

$$C_{ref} = (x_2 - x_1) \bullet (y_3 - y_1) - (x_3 - x_1) \bullet (y_2 - y_1)$$

$$D_{ref} = 0 - \left( A_{ref} \bullet x_1 + B_{ref} \bullet y_1 + C_{ref} \bullet z_1 \right).$$

The position of the intersectin line of the two planes in the camera coordinate system is determined through the reference plane equation and the light plane equation in the camera coordinate system, that is, a theoretical position expression of the reference laser line in the laser image.

In the camera coordinate system, two points $P_a = (x_a, y_a, z_a)$ and $P_b = (x_b, y_b, z_b)$ that fall on the theoretical position expression of the reference laser line are selected, setting $z_a = 1$, $z_b = 2$. Taking $P_a$ as an example, the following equations are satisfied:

$$A_{laser} x_a + B_{laser} y_a + C_{laser} z_a + D_{laser} = 0$$

$$A_{ref} x_a + B_{ref} y_a + C_{ref} z_a + D_{ref} = 0.$$

It can be obtained:

$$x_a = \frac{\left( B_{laser} * C_{ref} * z_a + B_{laser} * D_{ref} - B_{ref} * C_{laser} * z_a - B_{ref} * D_{laser} \right)}{\left( A_{laser} * B_{ref} - A_{ref} * B_{laser} \right)}$$

$$y_a = \frac{\left( A_{laser} * C_{ref} * z_a + A_{laser} * D_{ref} - A_{ref} * C_{laser} * z_a - A_{ref} * D_{laser} \right)}{\left( A_{ref} * B_{laser} - A_{laser} * B_{ref} \right)}.$$

Similarly, $P_b$ may also be obtained in the same way.

b) Coordinates of $P_a$ and $P_b$ in the pixel coordinate system are calculated, and the two points are connected to determine the theoretical position expression of the reference laser line in the pixel coordinate system $A_{fl}x + B_{fl}y + C_{fl}z = 0$:

Taking $P_a$ as an example, coordinates $(u_a, v_a)$ of the point in the pixel coordinate system are obtained.

$$\frac{1}{d_a} \bullet \begin{bmatrix} u_a \\ v_a \end{bmatrix} = K \bullet P_a = \begin{bmatrix} f_x & 0 & u_0 \\ 0 & f_y & v_0 \\ 0 & 0 & 1 \end{bmatrix} \bullet \begin{bmatrix} x_a \\ y_a \\ z_a \end{bmatrix}.$$

Similarly, coordinates $(u_b, v_b)$ of $P_b$ in the pixel coordinate system are obtained; and the two points are connected to determine parameters of the theoretical position expression of the reference laser line:

$$A_{fl} = v_b - u_b, B_{fl} = u_a - u_b, C_{fl} = \left( v_a - v_b \right) * u_a + \left( u_a - u_b \right) * u_b.$$

In some embodiments, the mobile robot coordinate system beomes different from the world coordinate system after the mobile robot moves, and a method for obtaining the transformation matrix $T_{wc}$ from the camera coordinate system to the world coordinate system includes:

obtaining a transformation matrix $T_{RC}$ between the mobile robot coordinate system and the camera coordinate system;

obtaining a posture $T_{WI}$ of the mobile robot in the world coordinate system at the current moment through an inertial measurement unit;

obtaining a transformation matrix $T_{RI}$ between the inertial measurement unit coordinate system with the mobile robot coordinate system;

obtaining a transformation relationship between the robot coordinate system and the world coordinate system at the current moment as $T_{WR'} = T_{WI} \bullet T_{RI}^{-1}$ ; and

then calculating the transformation matrix $T_{wc}$ from the camera coordinate system to the world coordinate system:

$$T_{WC} = T_{WI} \bullet T_{RI}^{-1} \bullet T_{RC} .$$

The obstacle identification method provided by the embodiment allows real-time correction of the transformation matrix from the camera coordinate system to the world coordinate system by virtue of the inertial measurement unit to adapt to the movement of the mobile robot.

In some embodiments, step S101 specifically includes:

emitting the horizontal line laser to the target area, wherein the angle between the horizontal line laser and the reference plane is greater than 0° and less than 90°; and
obtaining the laser image of the target area.

The method further includes:

obtaining a background image of the target area, wherein the background image is acquired with the horizontal line laser deactivated; and
after the laser image of the target area is obtained, the method further includes:
performing background subtraction on the laser image based on the background image.

The obstacle identification method provided by the embodiment performs background subtraction by activating and deactivating the horizontal line laser, thus filtering out the influence of ambient light and improving the accuracy of obstacle identification.

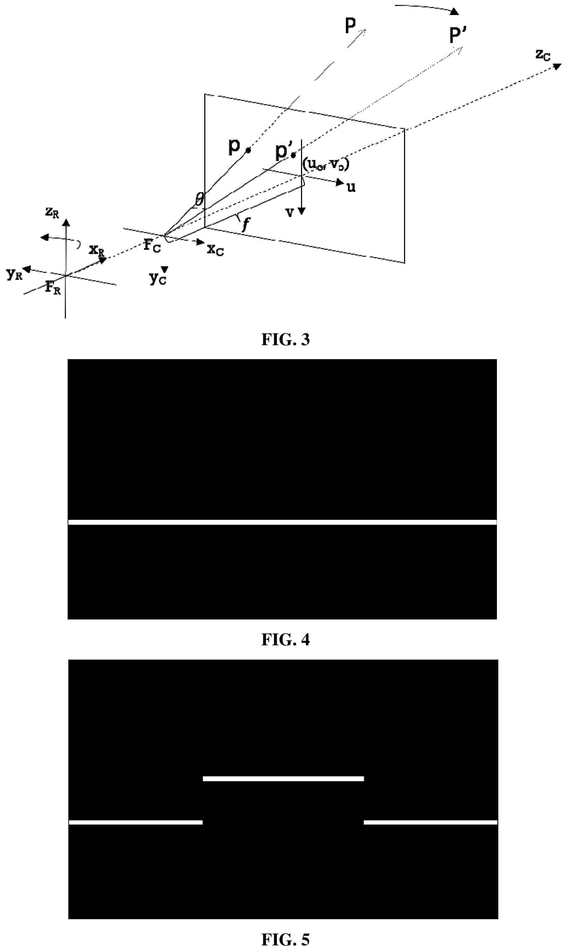

FIG. 3 is a schematic diagram of motion compensation according to an embodiment of the present disclosure. As shown in FIG. 3, when the robot has angular velocity, a pixel misalignment occurs between the laser image and the background image in the horizontal direction due to time discrepancy between activating and deactivating of the horizontal line laser. Therefore, before background subtraction is performed on the laser image based on the background image, motion compensation is performed on the background image using a rotation angle measured by the inertial measurement unit.

In view of possible bumps of the mobile robot during movement, the obstacle identification method provided by the embodiment of the present disclosure employs the inertial measurement unit to obtain motion data, so as to correct the position of the light plane of the line laser during the movement on one hand, and to enable motion compensation on the background image required for background subtraction on the other hand to achieve alignment of the background image with the laser image.

As shown in FIG. 3, when the mobile robot rotates clockwise by $\theta$ around an axis $z_R$, it is equivalent to that a point P rotates clockwise by $\theta$ relative to an axis $y_C$ of the camera coordinate system. For a image, the imaging of the same point in the pixel coordinate system shifts from point $p$ to point $p'$. When the background image is taken at time $t$ first and then the laser image is taken at time $t'$, pixel coordinate value of the point P on the background image is $p = (u, v)$, and then its pixel coordinate value $p' = (u', v')$ on the laser image may be calculated as:

$$u' = f \bullet \tan\left( \arctan\left( \frac{u - u_0}{f} \right) + \theta \right) + u_0, v' = v .$$

In some embodiments, step S102 specifically includes: extracting pixel areas with pixel gray values greater than a preset gray value from the background-subtracted laser image as the candidate laser stripes.

Specifically, each column of pixel points in the laser image is traversed, and pixel areas with widths greater than a preset width and brightness greater than a preset brightness are extracted as the candidate laser stripes.

FIG. 4 is a laser image when there is no obstacle; and FIG. 5 is a laser image when there is an obstacle. As shown in FIGS. 4 and 5, when a single-line laser plane is emitted, only one line laser stripe may be formed on a segment of a column, and the remaining bright spots are reflections or noise. Therefore, there may only be a segment of candidate laser light stripe on the same column. The closer the candidate laser stripe is to the theoretical position of the reference laser line, the higher the probability that the candidate laser stripe is a valid laser stripe. At the same time, the larger the gray value of the central pixel, the higher the probability that the candidate laser stripe is a valid laser stripe. In some embodiments, step S104 specifically includes: obtaining a distance between each candidate laser stripe and the theoretical position; obtaining the gray value of a central pixel point of each candidate laser stripe; calculating a score of each candidate laser stripe based on the distance and the gray value; and taking the candidate laser stripe with the highest score as the valid laser stripe, wherein the larger the gray value, the higher the score, and the smaller the distance, the higher the score.

In some embodiments, step S105 specifically includes:

after determining the central pixel point $p = (u, v)$ of the valid laser stripe, first recovering obstacle point cloud coordinates $P_C = (x, y, z)$ in the camera coordinate system corresponding to the pixel point:

the following constraints can be established according to the mapping $K = \begin{bmatrix} f_x & 0 & u_0 \\ 0 & f_y & v_0 \\ 0 & 0 & 1 \end{bmatrix}$ from the camera

coordinate system to the pixel coordinate system:

$$\frac{(u - u_0)}{f_x} = \frac{x}{z}$$

$$\frac{(v - v_0)}{f_y} = \frac{y}{z};$$

at the same time, since points from the light plane of the line laser certainly fall on the light plane of the line laser, the following constraint can be established using the light plane equation of the line laser in the camera coordinate system:

$$A_{laser} x + B_{laser} y + C_{laser} z + D_{laser} = 0,$$

this yields the following solutions:

$$z = \frac{-D_{laser}}{A_{laser} \cdot \frac{(u - u_0)}{f_x} + B_{laser} \cdot \frac{(v - v_0)}{f_y} + C_{laser}}$$

$$x = \frac{(u - u_0)}{f_x} \cdot z = \frac{(u - u_0)}{f_x} \cdot \frac{-D_{laser}}{A_{laser} \cdot \frac{(u - u_0)}{f_x} + B_{laser} \cdot \frac{(v - v_0)}{f_y} + C_{laser}}$$

$$y = \frac{(v - v_0)}{f_y} \cdot z = \frac{(v - v_0)}{f_y} \cdot \frac{-D_{laser}}{A_{laser} \cdot \frac{(u - u_0)}{f_x} + B_{laser} \cdot \frac{(v - v_0)}{f_y} + C_{laser}} ;$$

and after obtaining the obstacle point cloud coordinates $P_C = (x, y, z)$ in the camera coordinate system, coordinates in the mobile robot coordinate system may be recovered using the transformation matrix $T_{RC} = \begin{bmatrix} R_{RC} & t_{RC} \\ 0 & 1 \end{bmatrix}$ from

the camera coordinate system to the mobile robot coordinate system and the current pose $T_{WR} = \begin{bmatrix} R_{WR} & t_{WR} \\ 0 & 1 \end{bmatrix}$ of

the mobile robot in the world coordinate system:

$$P_W = T_{WR} T_{RC} P_C = \begin{bmatrix} R_{WR} & t_{WR} \\ 0 & 1 \end{bmatrix} \begin{bmatrix} R_{RC} & t_{RC} \\ 0 & 1 \end{bmatrix} (x, y, z)^T = (x_W, y_W, z_W) .$$

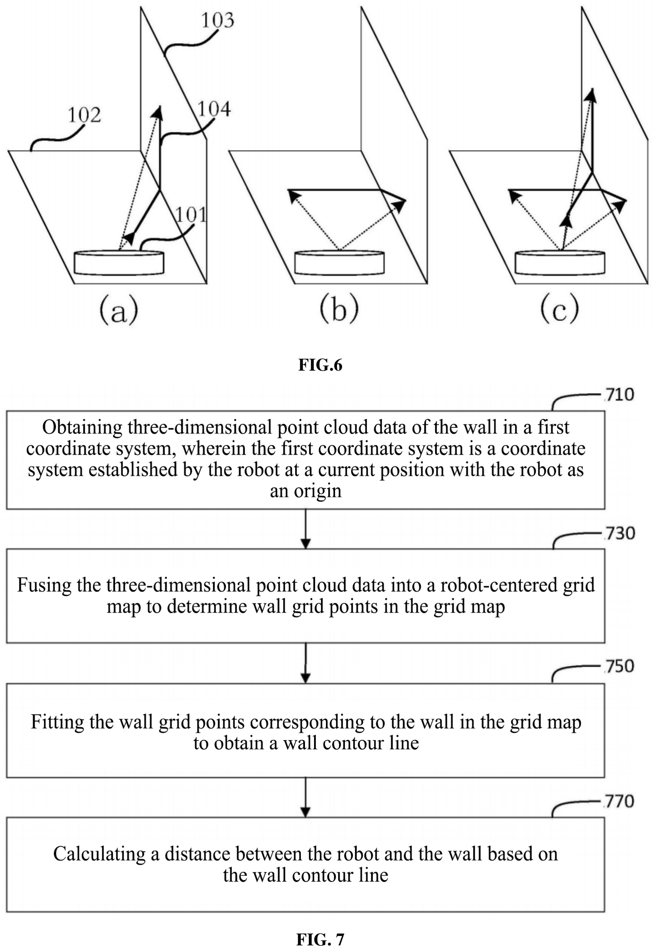

When the obstacle is a wall, an application scenario involved in the present disclosure is briefly described first with reference to FIG. 6.

Referring to FIG. 6, there is shown a schematic diagram of a scenario allowing application of line laser ranging according to an embodiment of the present disclosure.

As mentioned above, the robot involved in the present disclosure may be a sweeping robot 101. While performing a cleaning task, the robot needs to move back and forth in a cleaning area 102. In this case, it is necessary for the robot to sense obstacles in the cleaning area to avoid collision between the robot and the obstacles, wherein the wall 103, as one type of obstacle, also needs to be sensed by the robot. Usually, the robot can move along the wall. During the movement along the wall, it is necessary to determine the distance between the robot and the wall in real time to improve the control accuracy of the robot's movement along the wall.

In the present disclosure, the robot may assist itself in moving along the wall by virtue of the line laser. Specifically, the robot emits the line laser through one or more line laser modules installed on itself, and assists itself in moving along the wall by collecting the laser stripe 104 projected on the obstacle (such as the wall obstacle). The line laser module may project the laser outward in a variety of ways, for example, projecting a vertical line laser as shown in FIG. 1(a), projecting a horizontal line laser as shown in FIG. 1(b), or projecting a vertical line laser and a horizontal line laser in combination as shown in FIG. 1(c).

Referring to FIG. 7, there is shown a flow chart of a method for detecting a distance between a robot and a wall according to an embodiment of the present disclosure. The method for detecting the distance between the robot and the wall may be executed by a device having a computing and processing function. Referring to FIG. 2, the method for detecting the distance between the robot and the wall at least includes steps 710-770, which are described in detail as follows:

In step 710, three-dimensional point cloud data of the wall in a first coordinate system is obtained, wherein the first coordinate system is a coordinate system established by the robot at a current position with the robot as an origin.

In the present disclosure, the three-dimensional point cloud data may be used to characterize position distribution of the wall in the first coordinate system, wherein the first coordinate system is a coordinate system established by the robot at the current position with the robot as the origin. It should be noted here that since the robot is in a moving state in the cleaning area, the coordinate system established with the robot as the origin (i.e., the robot coordinate system) also moves relative to the cleaning area. It should be further noted that although the wall is stationary in the cleaning area, the three-dimensional point cloud data of the wall reflected in the robot coordinate system (i.e., the position coordinates of the wall in the robot coordinate system) changes as the robot coordinate system moves with the robot in the cleaning area.

In the present disclosure, when the robot moves from one position to another, it may emit a line laser outward through the line laser module installed on itself, and determine three-dimensional point cloud data of a laser-projected position on the wall in the robot coordinate system (i.e., coordinates of the laser-projected position on the wall in the robot coordinate system) based on the laser stripe projected onto the wall.

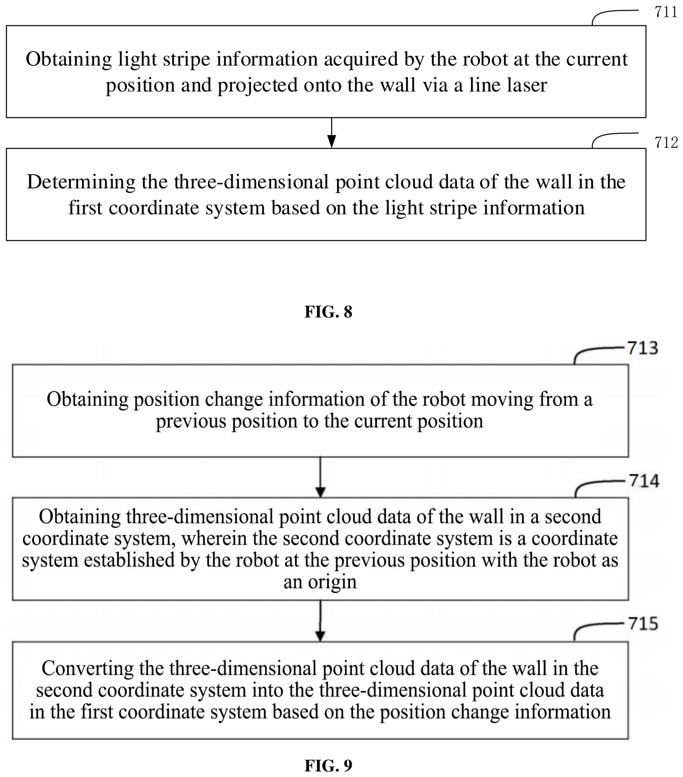

In an embodiment of the present disclosure, obtaining the three-dimensional point cloud data of the wall in the first coordinate system may be executed according to steps shown in FIG. 8.

Referring to FIG. 8, there is shown a detailed flow chart of obtaining three-dimensional point cloud data of the wall in a first coordinate system according to an embodiment of the present disclosure. Specifically, steps 711 to 712 are included:

Step 711: obtaining light stripe information acquired by the robot at the current position and projected onto the wall via the line laser; and
Step 712: determining the three-dimensional point cloud data of the wall in the first coordinate system based on the light stripe information.

In a specific example of the embodiment, obtaining the light stripe information acquired by the robot at the current position and projected onto the wall via the line laser may be executed according to the following steps 7111 to 7113:

Step 7111: obtaining a wall image acquired by the robot at the current position with the line laser activated, as a first image;
Step 7112: obtaining a wall image acquired by the robot at the current position with the line laser deactivated, as a second image; and
Step 7113: performing differential processing on the first image and the second image to obtain the light stripe information projected onto the wall via the line laser.

In the present disclosure, both the wall image acquired with the line laser activated and the wall image acquired with the line laser deactivated may be acquired by a camera installed on the robot.

In the present disclosure, a difference image is obtained by performing differential processing on the first image and the second image. Laser stripes with brightness values greater than a preset brightness threshold are extracted from the difference image to obtain the laser stripe information projected onto the wall via the line laser.

In other specific examples of the embodiment, obtaining the light stripe information projected onto the wall via the line laser and acquired by the robot at the current position may also be implemented in such a way that after the wall image acquired by the robot at the current position is obtained with the line laser activated, the light stripe information projected onto the wall is identified from the image through an image identification algorithm (e.g., an AI-based image identification algorithm).

In a specific example of the embodiment, determining the three-dimensional point cloud data of the wall in the first coordinate system based on the light stripe information may be executed according to the following steps 7121 to 7122:

Step 7121: determining wall point cloud coordinates of a light stripe pixel center in the light stripe information in the camera coordinate system according to a mapping relationship from the camera coordinate system to the pixel coordinate system; and

Step 7122: determining the three-dimensional point cloud data of the wall in the first coordinate system according to the wall point cloud coordinates and a transformation matrix from the camera coordinate system to the first coordinate system.

In the present disclosure, after the light stripe information projected onto the wall is obtained, the light stripe pixel center p=(u, v) in the light stripe information may be first determined, and then the wall point cloud coordinates $P_C$=(x, y, z) of the pixel center in the camera coordinate system is determined.

Specifically, according to the mapping relationship from the camera coordinate system to the pixel coordinate system:

$$K = \begin{bmatrix} f_x & 0 & u_0 \\ 0 & f_y & v_0 \\ 0 & 0 & 1 \end{bmatrix};$$

constraints are established as follows:

$$\frac{u - u_0}{f_x} = \frac{x}{z}, \quad \frac{v - v_0}{f_y} = \frac{y}{z}.$$

At the same time, since points from the light plane of the line laser certainly fall on the light plane of the line laser, the following constraint can be established using the light plane equation of the line laser in the camera coordinate system:

$$A_{laser}x + B_{laser}y + C_{laser}z + D_{laser} = 0 .$$

From this, the wall point cloud coordinates $P_C$=(x, y, z) of the pixel center in the camera coordinate system may be solved as follows:

$$z = \frac{-D_{laser}}{A_{laser} \times \dfrac{u - u_0}{f_x} + B_{laser} \times \dfrac{v - v_0}{f_y} + C_{laser}}$$

$$x = \frac{u - u_0}{f_x} \times z = \frac{u - u_0}{f_x} \times \frac{-D_{laser}}{A_{laser} \times \dfrac{u - u_0}{f_x} + B_{laser} \times \dfrac{v - v_0}{f_y} + C_{laser}}$$

$$y = \frac{v - v_0}{f_y} \times z = \frac{v - v_0}{f_y} \times \frac{-D_{laser}}{A_{laser} \times \frac{u - u_0}{f_x} + B_{laser} \times \frac{v - v_0}{f_y} + C_{laser}}.$$

After obtaining the wall point cloud coordinates $P_C$=(x, y, z) in the camera coordinate system, by using the transformation matrix from the camera coordinate system to the first coordinate system (i.e., the camera coordinate system when the robot is at the current position):

$$T_{RC} = \begin{bmatrix} R_{RC} & t_{RC} \\ 0 & 1 \end{bmatrix},$$

three-dimensional point cloud data of the wall in the first coordinate system may be recovered:

$$P_R = T_{RC} \times P_C = \begin{bmatrix} R_{RC} & t_{RC} \\ 0 & 1 \end{bmatrix} \times (x, y, z)^T = (x_R, y_R, z_R).$$

In an embodiment of the present disclosure, obtaining the three-dimensional point cloud data of the wall in the first coordinate system may also be executed according to steps shown in FIG. 9.

Referring to FIG. 9, there is shown another detailed flow chart of obtaining three-dimensional point cloud data of the wall in a first coordinate system according to an embodiment of the present disclosure. Specifically, steps 713 to 715 are included:

Step 713: obtaining position change information of the robot moving from a previous position to the current position;
Step 714: obtaining three-dimensional point cloud data of the wall in a second coordinate system, wherein the second coordinate system is a coordinate system established by the robot at the previous position with the robot as the origin; and
Step 715: converting the three-dimensional point cloud data of the wall in the second coordinate system into three-dimensional point cloud data in the first coordinate system based on the position change information.

In the present disclosure, although the wall is stationary in the cleaning area, the three-dimensional point cloud data of the wall reflected in the robot coordinate system (i.e., the position coordinates of the wall in the robot coordinate system) changes as the robot coordinate system moves with the robot in the cleaning area. Based on this, it is necessary to convert the three-dimensional point cloud data of the wall in the robot coordinate system at a historical position into three-dimensional point cloud data in the robot coordinate system at the current position. Specifically, the three-dimensional point cloud data of the wall in the second coordinate system (the coordinate system established bt the robot at the previous position with the robot as the origin) is converted into the three-dimensional point cloud data in the first coordinate system based on the position change information of the robot moving from the previous position to the current position.

Continuing to refer to FIG. 7, in step 730, the three-dimensional point cloud data is fused into a robot-centered grid map to determine wall grid points in the grid map.

In the present disclosure, in order to fuse the 3D point cloud data of the wall in the robot coordinate system, a grid map (i.e., a local wall 2D grid map) with the center of the robot as the origin may be maintained, and coordinate positions of wall points observed by the robot during its movement along the wall relative to the robot coordinate system at the current position are updated to the grid map in real time. When the robot moves, the coordinate position of the wall observed at the historical position is transformed to the robot coordinate system at a current position and continues to be maintained on the grid map, and multi-frame line laser point cloud are fused to form a scan of the wall.

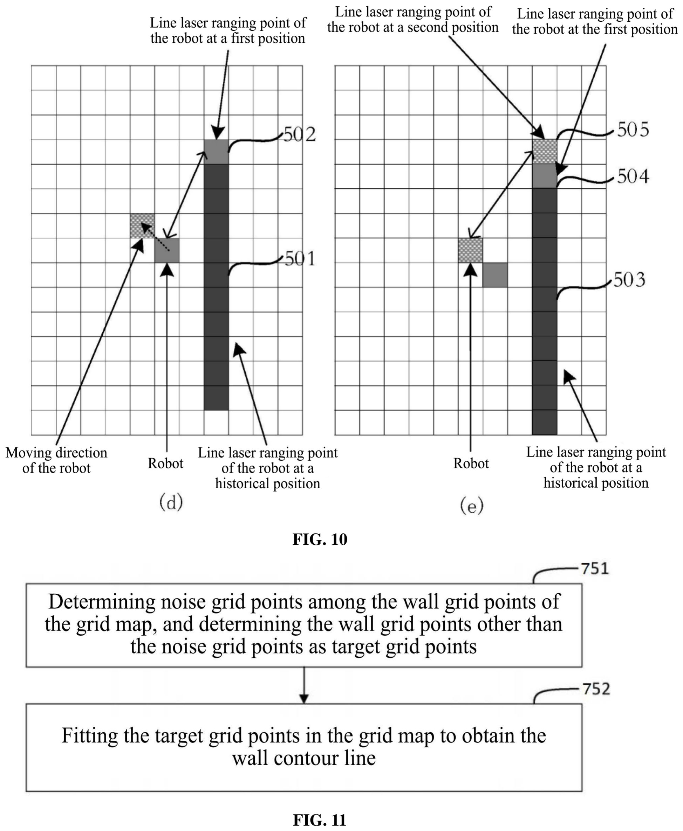

In order to enable those skilled in the art to better understand the present disclosure, an explanation will be given below with reference to FIG. 10.

Referring to FIG. 10, there is shown a demonstration diagram 500 of determining wall grid points in the grid map according to an embodiment of the present disclosure.

As shown in FIG. 10 (d), when the robot is at a first position, the robot is at the center of the grid map. A grid point 501 is a reflection of the wall in the grid map observed by the robot at a historical position via the line laser, and a grid point 502 is a reflection of the wall in the grid map observed by the robot at the first position (i.e., a previous position) via the line laser. After the robot moves from the first position to a second position, the grid map is maintained so that the robot remains at the center of the grid map, as shown in FIG. 10(e). At this time, compared to FIG. 10 (d), the relative position between the robot and the wall has changed due to the movement of the robot and inFIG. 10(e)), the relative position between the robot and the wall grid points in the grid map has also changed. Specifically, as the robot moves to the upper left in this figure, the wall grid points in the grid map move to the lower right in the figure relative to the robot. Specifically, the grid point 503 is a reflection of the wall in the grid map, which is observed by the robot via the line laser at the historical position after the robot moves to the second position (i.e., the current position); the grid point 504 is a reflection of the wall in the grid map, which is observed by the robot via the line laser at the first position after the robot moves to the second position (i.e., the current position); and the grid point 505 is a reflection of the wall in the grid map, which is observed by the robot via the line laser at the second position after the robot moves to the second position (i.e., the current position).

Continuing to refer to FIG. 7, in step 705, fitting the wall grid points corresponding to the wall in the grid map to obtain a wall contour line.

In this application, since the wall grid point is a position reflection of the wall in the cleaning area in the two-dimensional grid map, and a grid center is also a position reflection of the robot in the cleaning area in the two-dimensional grid map, the wall contour line obtained by fitting the wall grid points corresponding to the wall in the grid map may be regarded as an abstract reflection of the position of the wall as a whole in the two-dimensional grid map.

In an embodiment of the present disclosure, fitting the wall grid points corresponding to the wall in the grid map to obtain the wall contour line may be executed according to steps as shown in FIG. 11.

Referring to FIG. 11, there is shown a detailed flow chart of fitting wall grid points corresponding to a wall in the grid map according to an embodiment of the present disclosure. Specifically, steps 751 to 752 are included:

Step 751: determining noise grid points among the wall grid points of the grid map, and determining the wall grid points other than the noise grid points as target grid points; and

Step 752: fitting the target grid points in the grid map to obtain the wall contour line.

Ideally, when the wall is a straight line, wall points scanned by the line laser module installed on the robot should also fall on a straight line. However, in practical use of the line laser to observe the wall, it is inevitable that the ranging value will occasionally jump or produce noise point due to various uncertainties. When the requirement for wall-following distance accuracy of the robot is high, and the control of wall-following movement of the robot is relatively sensitive, the robot may constantly adjust its posture by rotating left or right by a certain angle to maintain the distance between its center point and the wall. It seems that the wall-following behavior of the robot undergo frequent swinging. To avoid the impact of wall noise point on the stability and smoothness of wall-following behavior of the robot, it is necessary to perform wall fitting on a local obstacle two-dimensional grid map to filter out ranging noise point.

Based on this, in the present disclosure, by determining the noise grid points among the wall grid points of the grid map, determining the wall grid points other than the noise grid points as the target grid points, and finally fitting the target grid points in the grid map to obtain the wall contour line, can improve the accuracy of the wall contour line.

In a specific example of the present disclosure, determining the noise grid points among the wall grid points of the grid map may be executed according to steps 7511 to 7515 as follows:

Step 7511: traversing each wall grid point in the grid map, and determining a probability value of the wall grid point, wherein the probability value is used to characterize the credibility of the wall grid point being used to reflect the wall;

Step 7512: if the probability value is less than or equal to a probability threshold, determining the wall grid point as a first noise grid point and determining the wall grid points other than the first noise grid points as candidate grid points;

Step 7513: traversing each candidate grid point in the grid map, and determining the number of the candidate grid points in a preset grid area where the candidate grid points are located;

Step 7514: determining the candidate grid points as second noise grid points if the number of the candidate grid points is less than or equal to a number threshold; and

Step 7515: determining the first noise grid point and the second noise grid points as the noise grid points.

Specifically, in the present disclosure, each wall grid point in the grid map corresponds to a probability value that characterizes the credibility of the wall grid point being used to reflect the wall. The larger the probability value, the higher the credibility. The probability value is correlated to the number of times each position on the wall is scanned by the line laser. For a certain position on the wall, the more times the position is scanned by the line laser currently and historically, the more the position is reflected in the three-dimensional point cloud data, so that the probability value of the wall grid point corresponding to the position in the grid map is larger, and then the credibility of the corresponding wall grid point is higher.

In the present disclosure, the wall grid points in the local obstacle two-dimensional grid map (i.e., grid map) may be traversed to determine whether the probability values of the wall grid points are greater than the probability threshold, so as to filter out a candidate grid point set that meets a wall determination condition (that is, to remove the first noise grid point). Further, for each candidate grid point in the candidate grid point set, in a window of a certain size in its neighborhood, it is determined whether the number of candidate grid points that are also determined to be candidate grid point is greater than the number threshold. For example, for each candidate grid point, it is determined whether the number of candidate grid points in its 3x3 neighborhood (i.e., 9 grid points) that are also the candidate grid point is greater than 3. If the number condition is met, procedd to the next step, otherwise, the candidate grid point is considered to be an isolated noise grid point (i.e., the second noise grid point) and is removed out of the candidate grid point set. The remaining grid points in the candidate grid point set are used as target grid points for fitting the wall contour line in the grid map.

Further, after the target grid points among the wall grid points are determined, the target grid points are fit in the grid map to obtain the wall contour line.

In a specific example of the embodiment, the target grid points may be fit based on the least square method to obtain the wall contour line formula:

$$y=ax+b;$$

Specifically, for each target grid point $p_i=(x_i, y_i)$, the squared distance error to the wall contour line may be expressed as:

$(y_i-(ax_i+b))^2$, and the sum of distance errors of all the target grid points is $\displaystyle\sum_i (y_i - (ax_i + b))^2$. The optimization goal of least squares is to find such a set $(a,b)$ that minimizes the sum E of the squared distance errors of all the points,
wherein it is set:

$$E = \sum_i (y_i - (ax_i + b))^2 = \left\| Y - XB \right\|^2 ;$$

wherein $Y = \begin{bmatrix} y_1 \\ L \\ y_n \end{bmatrix}, X = \begin{bmatrix} x_1 & 1 \\ L & L \\ x_n & 1 \end{bmatrix}, B = \begin{bmatrix} a \\ b \end{bmatrix}$ is further rewritten as:

$$E = (Y-XB)^T (Y-XB) = Y^T Y - 2(XB)^T Y + (XB)^T (XB).$$

A derivative of an objective function is taken, and when its derivative is zero, the corresponding E is an extreme value, i.e.,

$$\frac{dE}{dB} = 2X^T XB - 2X^T Y = 0 .$$

To solve for B satisfying $X^T XB = X^T Y$, a matrix operation is performed to yield $B= (X^T X)^{-1} (X^T Y)$, from which a and b can be derived.

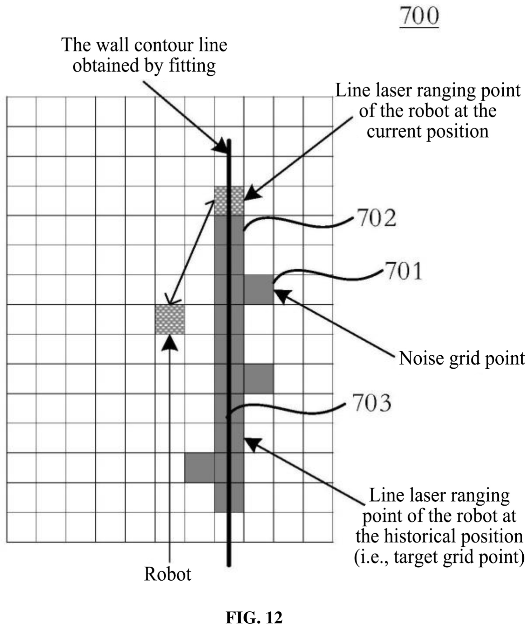

In order to enable those skilled in the art to better understand the present disclosure, an explanation will be given below with reference to FIG. 12.

Referring to FIG. 12, there is shown a demonstration diagram 700 of fitting wall grid points corresponding to the wall in the grid map according to an embodiment of the present disclosure.

As shown in FIG. 12, noise grid point 701 are filtered out of the wall grid points of the grid map to obtain target grid points 702, and a wall contour line 703 is obtained by fitting the target grid points.

Continuing to refer to FIG. 7, a distance between the robot and the wall is calculated based on the wall contour line in step 770.

In the present disclosure, after the target grid points are fit to obtain the wall contour line y=ax+b, the distance between the robot and the wall may be calculated based on the wall contour line, that is, the distance information from the robot's center point $p_r=(x_r, y_r)$ to the wall contour line y=ax+b is calculated as:

$$D = \frac{|ax_r - y_r + b|}{\sqrt{a^2 + 1}}$$

The distance information is output to a robot wall-following planning and control module for precise control of the robot as the robot moves along the wall.

It can be seen from the method shown in FIG. 7 that in the present disclosure, by obtaining the three-dimensional point cloud data of the wall in the coordinate system established at the current position with the robot as the origin and fusing the three-dimensional point cloud data into the robot-centered grid map, the wall grid points is determined in the grid map; and then the wall grid points corresponding to the wall are fit in the grid map to obtain the wall contour line, and the distance between the robot and the wall may be calculated based on the wall contour line. Since the three-dimensional point cloud data of the wall in the robot coordinate system can accurately reflect the relative position between the wall and the robot, fusing the three-dimensional point cloud data into the robot-centered grid map ensures that the wall grid points in the grid map accurately reflect the relative position between the wall and the robot. Therefore, the distance between the robot and the wall can be accurately calculated based on the wall contour line obtained by fitting the wall grid points.

It should be understood that the foregoing general description and the following detailed description are merely exemplary and explanatory, and should not be construed as limiting the present disclosure.

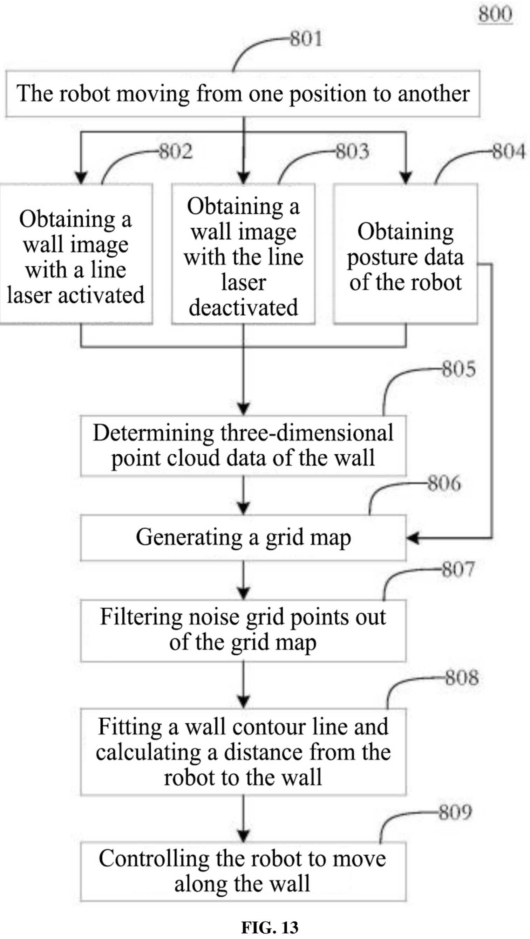

In order to enable those skilled in the art to better understand the present disclosure, an application process of the present disclosure will be briefly described below with reference to FIG. 13 using a specific embodiment.

Referring to FIG. 13, there is shown a flow chart of controlling a robot to move along a wall according to an embodiment of the present disclosure. Specifically, steps 801 to 809 are included:

Step 801: the robot moving from one position to another;
Step 802: obtaining a wall image with a line laser activated;
Step 803: obtaining a wall image with the line laser deactivated;
Step 804: obtaining posture data of the robot;
Step 805: determining three-dimensional point cloud data of the wall based on the wall image obtained with the line laser activated, the wall image obtained with the line laser deactivated and an image of the posture data of the robot;
Step 806: generating a two-dimensional grid map based on the three-dimensional point cloud data and the posture data of the robot;
Step 807: filtering noise grid points out of the two-dimensional grid map;
Step 808: fitting a wall contour line in the two-dimensional grid map, and calculating a distance from the robot to the wall based on the wall contour line; and
Step 809: controlling the robot to move along the wall according to the distance from the robot to the wall.

In the present disclosure, when the robot moves from one position to another (i.e., a current position), by determining the three-dimensional point cloud data of the wall in the robot coordinate system at the current position in real time and fusing the three-dimensional point cloud data into the robot-centered grid map, the wall grid points are determined in the grid map; and then the wall grid points corresponding to the wall are fit in the grid map to obtain the wall contour line, and the distance between the robot and the wall may be calculated based on the wall contour line. Since the three-dimensional point cloud data of the wall in the robot coordinate system can accurately reflect the relative position between the wall and the robot, fusing the three-dimensional point cloud data into the robot-centered grid map ensures that the wall grid points in the grid map accurately reflect the relative position between the wall and the robot. Therefore, the distance between the robot and the wall can be accurately calculated based on the wall contour line obtained by fitting the wall grid points, so as to improve the control accuracy of wall-following movement of the robot.

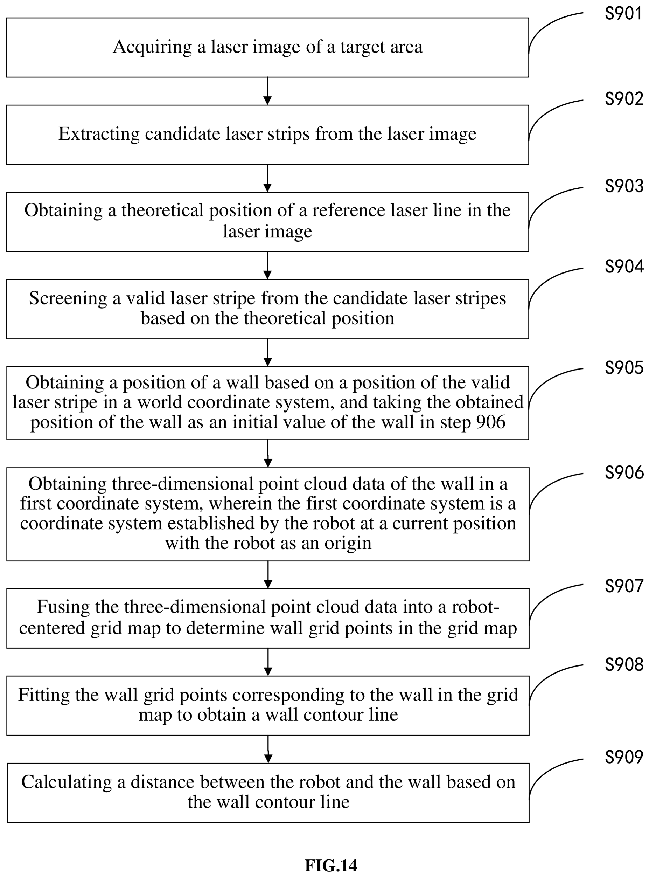

referring to FIG. 14, there is shown a schematic flow chart of a method for detecting an obstacle according to an embodiment of the present disclosure. The embodiment includes steps 901-909 as follows:

Step 901: acquiring a laser image of a target area;
Step 902: extracting candidate laser stripes from the laser image;

Step 903: obtaining a theoretical position of a reference laser line in the laser image;

Step 904: screening a valid laser stripe from the candidate laser stripes based on the theoretical position;

Step 905: obtaining a position of a wall based on a position of the valid laser stripe in a world coordinate system, and taking the obtained position of the wall as an initial value of the wall in step 906;

Step 906: obtaining three-dimensional point cloud data of the wall in a first coordinate system, wherein the first coordinate system is a coordinate system established by the robot at a current position with the robot as an origin;

Step 907: fusing the three-dimensional point cloud data into a robot-centered grid map to determine wall grid points in the grid map;

Step 908: fitting the wall grid points corresponding to the wall in the grid map to obtain a wall contour line; and

Step 909: calculating a distance between the robot and the wall based on the wall contour line.

The following describes an apparatus embodiment of the present disclosure, which can be used to execute the method according to the above-mentioned embodiments of the present disclosure. For details not disclosed in the apparatus embodiment of the present disclosure, please refer to the above-mentioned embodiments of the present disclosure.

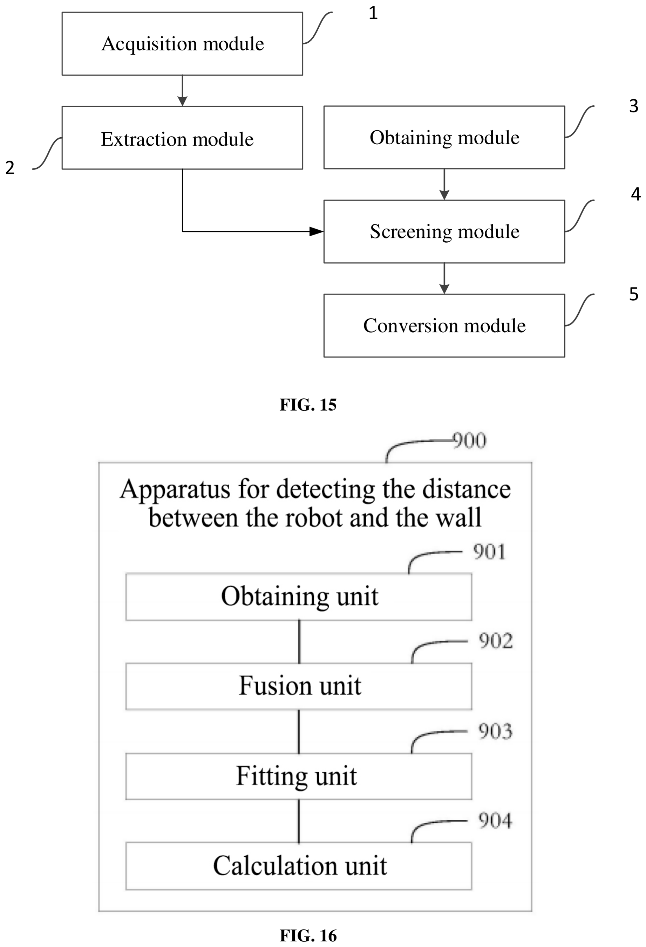

FIG. 15 is a flow chart of an obstacle identification apparatus according to an embodiment of the present disclosure. As shown in FIG. 15, based on the same concept, an exemplary embodiment of the present disclosure further provides an obstacle identification apparatus which includes:

an acquisition module 1 for acquiring a laser image of a target area;

an extraction module 2 for extracting candidate laser stripes from the laser image;

an obtaining module 3 fro obtaining a theoretical position of a reference laser line in the laser image;

a screening module 4 for screening a valid laser stripe from the candidate laser stripes based on the theoretical position; and

a conversion module 5 for obtaining a position of an obstacle based on the position of the valid laser stripe in a world coordinate system.

Referring to FIG. 16, there is shown a block diagram of an apparatus for detecting a distance between a robot and a wall according to an embodiment of the present disclosure. As shown in FIG. 16, the apparatus 900 for detecting the distance between the robot and the wall according to the embodiment of the present disclosure includes: an obtaining unit 901, a fusion unit 902, a fitting unit 903 and a calculation unit 904,

wherein the obtaining unit 901 is used to obtain three-dimensional point cloud data of the wall in a first coordinate system, the first coordinate system is a coordinate system established by the robot at a current position with the robot as an origin; the fusion unit 902 is used to fuse the three-dimensional point cloud data into a robot-centered grid map to determine wall grid points in the grid map;

the fitting unit 903 is used to fit the wall grid points corresponding to the wall in the grid map to obtain a wall contour line; and

the calculation unit 904 is used to calculate a distance between the robot and the wall based on the wall contour line. An exemplary embodiment of the present disclosure further provides an electronic device which includes: at least one processor; and a memory in communication with the at least one processor. The memory stores a computer program that may be executed by the at least one processor; and when executed by the at least one processor, the computer program is used to cause the electronic device to execute the method according to the embodiment of the present disclosure.

An exemplary embodiment of the present disclosure further provides a non-transitory computer-readable storage medium storing a computer program, wherein the computer program is used to cause a computer to execute the method according to the embodiments of the present disclosure when executed by a processor of the computer.

It should be understood that the above specific embodiments of the present disclosure are only used to illustrate or explain principles of the present disclosure, and do not constitute a limitation on the present disclosure. Therefore, Within, any modifications, equivalent substitutions, improvements and the like made without departing from the spirit and scope of the present disclosure shall be included in the protection scope of the present disclosure. Additionally, the appended claims of the present disclosure are intended to cover all variations and modifications that fall within the scope and boundaries of the attached claims or within equivalent forms of such scope and boundaries.

**Claims**

1. An obstacle identification method, wherein the method comprises:

   acquiring a laser image of a target area;
   extracting candidate laser stripes from the laser image;
   obtaining a theoretical position of a reference laser line in the laser image;
   screening a valid laser stripe from the candidate laser stripes based on the theoretical position; and
   obtaining the position of an obstacle based on the position of the valid laser stripe in a world coordinate system.

2. The obstacle identification method according to claim 1, wherein obtaining the theoretical position of the reference laser line in the laser image comprises:

   obtaining a light plane equation of the laser in a camera coordinate system;
   obtaining a reference plane equation in the camera coordinate system; and
   obtaining an intersecting line expression of the light plane equation and the reference plane equation to obtain the theoretical position.

3. The obstacle identification method according to claim 2, wherein obtaining the reference plane equation in the camera coordinate system specifically comprises:

   based on a transformation matrix $T_{wc}$ from the camera coordinate system to the world coordinate system, converting coordinates of a plurality of points on a reference plane in the world coordinate system into coordinates in the camera coordinate system; and
   establishing the reference plane equation in the camera coordinate system based on the converted coordinates of the plurality of points.

4. The obstacle identification method according to claim 3, wherein for a mobile robot, obtaining the transformation matrix $T_{wc}$ from the camera coordinate system to the world coordinate system comprises:

   obtaining a transformation matrix $T_{RC}$ between a mobile robot coordinate system and the camera coordinate system;
   obtaining a current posture $T_{WI}$ of the mobile robot in the world coordinate system through an inertial measurement unit;
   obtaining a transformation matrix $T_{RI}$ between an inertial measurement unit coordinate system with the mobile robot coordinate system; and
   calculating the transformation matrix $T_{wc}$ from the camera coordinate system to the world coordinate system:

$$T_{WC} = T_{WI} \bullet T_{RI}^{-1} \bullet T_{RC} .$$

5. The obstacle identification method according to claim 2, wherein obtaining the intersecting line expression of the light plane equation and the reference plane equation to obtain the theoretical position specifically comprises:

   selecting two points $P_a = (x_a, y_a, z_a)$ and $P_a = (x_b, y_b, z_b)$ of the reference laser line in the camera coordinate system, setting $z_a = 1$, $z_b = 2$, and substituting them into the light plane equation and the reference plane equation to obtain $x_a$, $y_a$, $x_b$ and $y_b$;
   obtaining coordinates $(u_a, v_a)$ of $P_a$ in a pixel coordinate system based on $x_a$ and $y_a$;
   obtaining coordinates $(u_b, v_b)$ of $P_b$ in the pixel coordinate system based on $x_b$ and $y_b$;
   establishing the intersecting line expression:

$$A_{fl}x + B_{fl}y + C_{fl}z = 0 ;$$

   and
   obtaining parameters of the intersecting line expression based on $(u_a, v_a)$ and $(u_b, v_b)$.

6. The obstacle identification method according to claim 1, wherein acquiring the laser image of the target area comprises:

emitting a horizontal line laser to the target area, wherein an angle between the horizontal line laser and a reference plane is greater than 0° and less than 90°; and
obtaining the laser image of the target area.

7. The obstacle identification method according to claim 6, further comprising:

obtaining a background image of the target area; and
after the laser image of the target area is obtained, the obstacle identification method further comprising:
performing background subtraction on the laser image based on the background image.

8. The obstacle identification method according to claim 7, for the mobile robot, before performing background subtraction on the laser image based on the background image, the obstacle identification method further comprising:

obtaining motion information of the mobile robot; and
performing motion compensation on the background image based on the motion information.

9. The obstacle identification method according to claim 1, wherein extracting the candidate laser stripes from the laser image comprises:
extracting pixel areas with pixel gray values greater than a preset gray value from the laser image as the candidate laser stripes.

10. The obstacle identification method according to claim 1, wherein screening the valid laser stripe from the candidate laser stripes based on the theoretical position specifically comprises:

obtaining a distance between each candidate laser stripe and the theoretical position; and
taking the candidate laser stripe with the smallest distance as the valid laser stripe.

11. The obstacle identification method according to claim 1, wherein obtaining the position of the obstacle based on the position of the valid laser stripe in the world coordinate system specifically comprises:
obtaining the position of a central pixel point of the valid laser stripe in the world coordinate system to obtain the position of the obstacle.

12. The obstacle identification method according to claim 1, wherein the obstacle is a wall, and the method further comprises:

obtaining three-dimensional point cloud data of the wall in a first coordinate system, wherein the first coordinate system is a coordinate system established by the robot at a current position with the robot as an origin;
fusing the three-dimensional point cloud data into a robot-centered grid map to determine wall grid points in the grid map;
fitting the wall grid points corresponding to the wall in the grid map to obtain a wall contour line; and
calculating a distance between the robot and the wall based on the wall contour line.

13. The method according to claim 12, wherein obtaining the three-dimensional point cloud data of the wall in the first coordinate system comprises:

obtaining light stripe information acquired by the robot at the current position and projected onto the wall via a line laser; and
determining the three-dimensional point cloud data of the wall in the first coordinate system based on the light stripe information.

14. The method according to claim 13, wherein obtaining the light stripe information acquired by the robot at the current position and projected onto the wall via the line laser includes:

obtaining a wall image acquired by the robot at the current position with the line laser activated, as a first image;
obtaining a wall image acquired by the robot at the current position with the line laser deactivated, as a second image; and

performing differential processing on the first image and the second image to obtain the light stripe information projected onto the wall via the line laser.

15. The method according to claim 13, wherein determining the three-dimensional point cloud data of the wall in the first coordinate system based on the light stripe information comprises:

determining wall point cloud coordinates of a light stripe pixel center in the light stripe information in the camera coordinate system according to a mapping relationship from the camera coordinate system to the pixel coordinate system; and
determining the three-dimensional point cloud data of the wall in the first coordinate system according to the wall point cloud coordinates and a transformation matrix from the camera coordinate system to the first coordinate system.

16. The method according to claim 13, wherein obtaining the three-dimensional point cloud data of the wall in the first coordinate system further comprises:

obtaining position change information of the robot moving from a previous position to the current position;
obtaining three-dimensional point cloud data of the wall in a second coordinate system, wherein the second coordinate system is a coordinate system established by the robot at the previous position with the robot as an origin; and
converting the three-dimensional point cloud data of the wall in the second coordinate system into the three-dimensional point cloud data in the first coordinate system based on the position change information.

17. The method according to claim 12, wherein fitting the wall grid points corresponding to the wall in the grid map to obtain the wall contour line comprises:

determining noise grid points among the wall grid points of the grid map, and determining the wall grid points other than the noise grid points as target grid points; and
fitting the target grid points in the grid map to obtain the wall contour line.

18. The method according to claim 17, wherein determining the noise grid points among the wall grid points of the grid map comprises:

traversing each wall grid point in the grid map, and determining a probability value of the wall grid point, wherein the probability value is used to characterize the credibility of the wall grid point being used to reflect the wall;
if the probability value is less than or equal to a probability threshold, determining the wall grid point as a first noise grid point, and determining the wall grid points other than the first noise grid points as candidate grid points;
traversing each candidate grid point in the grid map, and determining the number of the candidate grid points in a preset grid area where the candidate grid points are located;
determining the candidate grid points as second noise grid points if the number of the candidate grid points is less than or equal to a number threshold; and
determining the first noise grid point and the second noise grid points as the noise grid points.

19. An obstacle identification apparatus, wherein the apparatus comprises:

an acquisition module for acquiring a laser image of a target area;
an extraction module for extracting candidate laser stripes from the laser image;
an obtaining module for obtaining a theoretical position of a reference laser line in the laser image;
a screening module for screening a valid laser stripe from the candidate laser stripes based on the theoretical position; and
a conversion module for obtaining a position of an obstacle based on the position of the valid laser stripe in a world coordinate system.

20. A mobile robot, wherein the mobile robot comprises:

a robot body;
a horizontal laser module disposed on the robot body, wherein the horizontal laser module includes an infrared laser emitter and a camera; and the horizontal laser module is used to acquire a laser image of a target area and send the laser image to a control module;
an inertial measurement unit disposed in the robot body and used to obtain a posture of the mobile robot in a world coordinate system and send the posture to the control module; and
the control module for executing the obstacle identification method according to any of claims 1-18.

21. An electronic device, comprising:

a processor, and
a memory for storing a program,
wherein the program comprises instructions which, when executed by the processor, cause the processor to execute the method according to any of claims 1-18.

22. A non-transitory computer-readable storage medium storing instructions of a computer, wherein the instructions of the computer are used to cause the computer to execute the method according to any of claims 1-18.

```
┌─────────────────────────────────────────────┐  S101
│      Acquiring a laser image of a target area │
└─────────────────────────────────────────────┘
                      │
                      ▼
┌─────────────────────────────────────────────┐  S102
│  Extracting candidate laser stripes from the laser │
│                     image                     │
└─────────────────────────────────────────────┘
                      │
                      ▼
┌─────────────────────────────────────────────┐  S103
│  Obtaining a theoretical position of a reference │
│           laser line in the laser image       │
└─────────────────────────────────────────────┘
                      │
                      ▼
┌─────────────────────────────────────────────┐  S104
│       Screening a valid laser stripe from the │
│   candidate laser stripes based on the theoretical │
│                    position                   │
└─────────────────────────────────────────────┘
                      │
                      ▼
┌─────────────────────────────────────────────┐  S105
│  Obtaining a position of an obstacle based on a │
│     position of the valid laser stripe in a world │
│                coordinate system              │
└─────────────────────────────────────────────┘
```

**FIG. 1**

**FIG. 2**

**FIG. 3**

**FIG. 4**

**FIG. 5**

**FIG.6**

Obtaining three-dimensional point cloud data of the wall in a first coordinate system, wherein the first coordinate system is a coordinate system established by the robot at a current position with the robot as an origin — 710

Fusing the three-dimensional point cloud data into a robot-centered grid map to determine wall grid points in the grid map — 730

Fitting the wall grid points corresponding to the wall in the grid map to obtain a wall contour line — 750

Calculating a distance between the robot and the wall based on the wall contour line — 770

**FIG. 7**

711

Obtaining light stripe information acquired by the robot at the current position and projected onto the wall via a line laser

712

Determining the three-dimensional point cloud data of the wall in the first coordinate system based on the light stripe information

**FIG. 8**

713

Obtaining position change information of the robot moving from a previous position to the current position

714

Obtaining three-dimensional point cloud data of the wall in a second coordinate system, wherein the second coordinate system is a coordinate system established by the robot at the previous position with the robot as an origin

715

Converting the three-dimensional point cloud data of the wall in the second coordinate system into the three-dimensional point cloud data in the first coordinate system based on the position change information

**FIG. 9**

Line laser ranging point of the robot at a first position

Line laser ranging point of the robot at a second position

Line laser ranging point of the robot at the first position

502

501

505

504

503

Moving direction of the robot

Robot

Line laser ranging point of the robot at a historical position

Robot

Line laser ranging point of the robot at a historical position

(d)

(e)

**FIG. 10**

751

Determining noise grid points among the wall grid points of the grid map, and determining the wall grid points other than the noise grid points as target grid points

752

Fitting the target grid points in the grid map to obtain the wall contour line

**FIG. 11**

700

The wall contour line obtained by fitting

Line laser ranging point of the robot at the current position

702

701

Noise grid point

703

Line laser ranging point of the robot at the historical position (i.e., target grid point)

Robot

FIG. 12

800

—801

The robot moving from one position to another

—802 —803 —804

| Obtaining a wall image with a line laser activated | Obtaining a wall image with the line laser deactivated | Obtaining posture data of the robot |

—805

Determining three-dimensional point cloud data of the wall

—806

Generating a grid map

—807

Filtering noise grid points out of the grid map

—808

Fitting a wall contour line and calculating a distance from the robot to the wall

—809

Controlling the robot to move along the wall

**FIG. 13**

Acquiring a laser image of a target area — S901

Extracting candidate laser strips from the laser image — S902

Obtaining a theoretical position of a reference laser line in the laser image — S903

Screening a valid laser stripe from the candidate laser stripes based on the theoretical position — S904

Obtaining a position of a wall based on a position of the valid laser stripe in a world coordinate system, and taking the obtained position of the wall as an initial value of the wall in step 906 — S905

Obtaining three-dimensional point cloud data of the wall in a first coordinate system, wherein the first coordinate system is a coordinate system established by the robot at a current position with the robot as an origin — S906

Fusing the three-dimensional point cloud data into a robot-centered grid map to determine wall grid points in the grid map — S907

Fitting the wall grid points corresponding to the wall in the grid map to obtain a wall contour line — S908

Calculating a distance between the robot and the wall based on the wall contour line — S909

**FIG.14**

**FIG. 15**

**FIG. 16**

## INTERNATIONAL SEARCH REPORT

| International application No. |
|---|
| **PCT/CN2023/140007** |

| A. | CLASSIFICATION OF SUBJECT MATTER |
|---|---|

G06T 7/73(2017.01)i

According to International Patent Classification (IPC) or to both national classification and IPC

| B. | FIELDS SEARCHED |
|---|---|

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNKI, DWPI, CNTXT, ENTXTC: 障碍, 栅格, 机器人, 激光, 光条, 光斑, 图像, 坐标系, 转换, 变换, 位置, 距离, 墙, obstruction, grid, robot, laser, light bar, spot, image, coordinate system, transform, location, distance, wall

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117011375 A (BEIJING STONE INNOVATION TECHNOLOGY CO., LTD.) 07 November 2023 (2023-11-07)<br>claims 1-10, and description, paragraphs 0003-0062 | 1-11, 19-22 |
| PY | CN 117011375 A (BEIJING ROBOROCK INNOVATION TECHNOLOGY CO., LTD.) 07 November 2023 (2023-11-07)<br>claims 1-10 | 12-22 |
| PY | CN 117008108 A (BEIJING ROBOROCK INNOVATION TECHNOLOGY CO., LTD.) 07 November 2023 (2023-11-07)<br>claims 1-7 | 12-22 |
| X | CN 211741574 U (SHENZHEN CAMSENSE TECHNOLOGY CO., LTD.) 23 October 2020 (2020-10-23)<br>description, paragraphs 0039-0087, and figures 1-5 | 1, 6-11, 19-22 |
| A | CN 114660568 A (GUANGXI LIUGONG MACHINERY CO., LTD.) 24 June 2022 (2022-06-24)<br>entire document | 1-22 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **19 March 2024** | **22 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/140007**

**C.    DOCUMENTS CONSIDERED TO BE RELEVANT**

| Category* | Citation of document, with indication, where appropriate, of the relevant passages | Relevant to claim No. |
|---|---|---|
| A | US 2017300061 A1 (IROBOT CORP.) 19 October 2017 (2017-10-19) entire document | 1-22 |

INTERNATIONAL SEARCH REPORT
Information on patent family members

International application No.

**PCT/CN2023/140007**

| Patent document cited in search report | | | Publication date (day/month/year) | Patent family member(s) | | | Publication date (day/month/year) |
|---|---|---|---|---|---|---|---|
| CN | 117011375 | A | 07 November 2023 | None | | | |
| CN | 117008108 | A | 07 November 2023 | None | | | |
| CN | 211741574 | U | 23 October 2020 | CN | 111103593 | A | 05 May 2020 |
| | | | | WO | 2021134809 | A1 | 08 July 2021 |
| CN | 114660568 | A | 24 June 2022 | None | | | |
| US | 2017300061 | A1 | 19 October 2017 | US | 9002511 | B1 | 07 April 2015 |
| | | | | US | 2015168954 | A1 | 18 June 2015 |
| | | | | US | 9632505 | B2 | 25 April 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211741448X X

- CN 202310009410